# EUROPÄISCHE PATENTSCHRIFT

(11) **EP 3 401 245 B1**
(45) Veröffentlichungstag und Bekanntmachung des Hinweises auf die Patenterteilung: **09.10.2019**
(21) Anmeldenummer: 18169627.9
(22) Anmeldetag: 26.04.2018
(51) Int. Cl.: B65G 21/20, B65G 47/91

(54) **SAUGNAPFVORRICHTUNG UND SAUGFÖRDERER MIT EINER DERARTIGEN SAUGNAPFVORRICHTUNG**
SUCTION CUP DEVICE AND SUCTION CONVEYOR WITH SUCH A SUCTION CUP DEVICE
DISPOSITIF À VENTOUSE ET DISPOSITIF DE TRANSPORT À ASPIRATION POURVU D'UN TEL DISPOSITIF À VENTOUSE

(30) Priorität: 26.04.2017 AT 503432017
(43) Veröffentlichungstag der Anmeldung: 14.11.2018
(73) Patentinhaber: Putz, Stefan, 4822 Bad Goisern (AT)
(72) Erfinder: Putz, Stefan, 4822 Bad Goisern (AT)
(74) Vertreter: HGF Europe LLP

(56) Entgegenhaltungen:
- EP-A1- 0 893 372
- DE-A1- 19 847 314
- DE-B- 1 058 938
- RU-C- 1 771 958

## Beschreibung

Die vorliegende Erfindung betrifft eine Saugnapfvorrichtung und einen Saugförderer mit einer derartigen Saugnapfvorrichtung.

Bei Vakuum-/Unterdruck- bzw. Saugförderern handelt es sich um Riemenförderer, wie z.B. Flach- oder Zahnriemenförderer, die über ein Vakuum ein Stückgut bzw. ein Produkt am Förderer fixieren.

Mit Saugförderern sind hohe Fördergeschwindigkeiten von bis zu 200 Meter pro Minute möglich.

Ein solcher Saugförderer umfasst einen Vakuumkanal. In Abhängigkeit der gewünschten Funktion und des Fördergutes wird das Vakuum an mehreren Stellen in den Vakuumkanal eingeleitet und über Vakuumventile geschaltet.

Weiterhin kann ein Produkt nicht nur auf dem Förderer, sondern auch hängend unterhalb des Förderers transportiert werden. Dabei wird das Fördergut von unten an den Vakuumförderer angesaugt und hängend bis zur gewünschten Position transportiert.

Mittels solcher Saugförderer ist auch ein Stapeln und Entstapeln sowie ein Ein- und Ausschleusen von Produkten möglich.

In der DE 196 49 824 A1 ist ein Saugförderer zum Transport von Bogen mit wenigstens einem in einer Transportrichtung bewegten Transporttrum offenbart. An den Transporttrum, sind die Bogen anlegbar. Weiterhin ist ein Träger mit einer das wenigstens eine Transporttrum abstützenden Stützfläche und einer mit wenigstens einer Ansaugöffnung kommunizierenden Saugkammeranordnung vorgeshen. In der Saugkammeranordnung herrscht ein Unterdruck, der eine die angelegten Bogen an das Transporttrum drückende Haltekraft erzeugt und auf eine die Ansaugöffnung durchsetzende Saugluftströmung eine Drosselwirkung ausübt.

Aus der DE 1 231 624 A geht ein mit einer Saugvorrichtung arbeitender Förderer zur Aufnahme von Platten hervor. Dieser umfasst ein Förderband zum Stapeln der Platten an einer vorbestimmten Stelle, wobei oberhalb einer Abgabestelle in einer Förderrichtung hintereinanderliegende, unabhängig voneinander beaufschlagbare Zonen einer Saugvorrichtung vorgesehen sind. Jede dieser Zonen weist eine Tastvorrichtung auf, die durch die jeweils an ihr vorbeilaufenden und von dem Förderer transportierten Platten betätigt wird und zur Steuerung des Druckes in der jeweiligen Zone dienen soll.

In der DE 10 2006 040 027 B3 ist ein Vakuumförderer zum Transport, Ablegen und Stapeln von flächenförmigen Gegenständen offenbart. Dieser umfasst einen umlaufenden Fördergurt und ist als Bandförderer ausgebildet. Der Fördergurt weist in Förderrichtung hintereinanderliegende und gleich beabstandet voneinander angeordnete Saugblöcke auf, die im Wesentlichen einen mit einem Gehäuse verbundenen Saugnapf aufweisen, der sich an das Fördergut saugend anlegt, dieses aufnimmt, transportiert und ablegt. An den Gehäusen der Saugblöcke ist eine hubgesteuerte Unterdruckpumpe angeschlossen.

Aus der DE 27 20 030 B2 geht ein Vakuumförderer hervor, welcher einen umlaufenden Fördergurt aufweist, der beispielsweise als Zahnriemen ausgebildet ist. In einer Förderrichtung sind hintereinanderliegend und gleich beabstandet voneinander eine Vielzahl von Saugblöcken angeordnet. Jeder Saugblock besteht im Wesentlichen aus einem Gehäuse, welches an dem Fördergurt befestigt ist und einem mit dem Gehäuse verbunden Saugnapf, der sich an ein Fördergut saugend anlegt und dieses aufnimmt und transportiert.

Weitere Saugförderer sind aus der DE 1 231 624 B und der DE 1 205 451 B bekannt.

In der DE 1 058 938 B ist ebenfalls eine Vorrichtung zum Transport, Ablegen und Stapeln von Flächenfördergut bekannt. Dabei sind hintereinanderliegende Saugnäpfe an einem Zugmittel vorgesehen. Die Saugnäpfe legen sich mittels einer Andruckrolle an das Fördergut saugend an. Mittels eines Belüftungsventils lässt sich dann das Fördergut wieder ablegen.

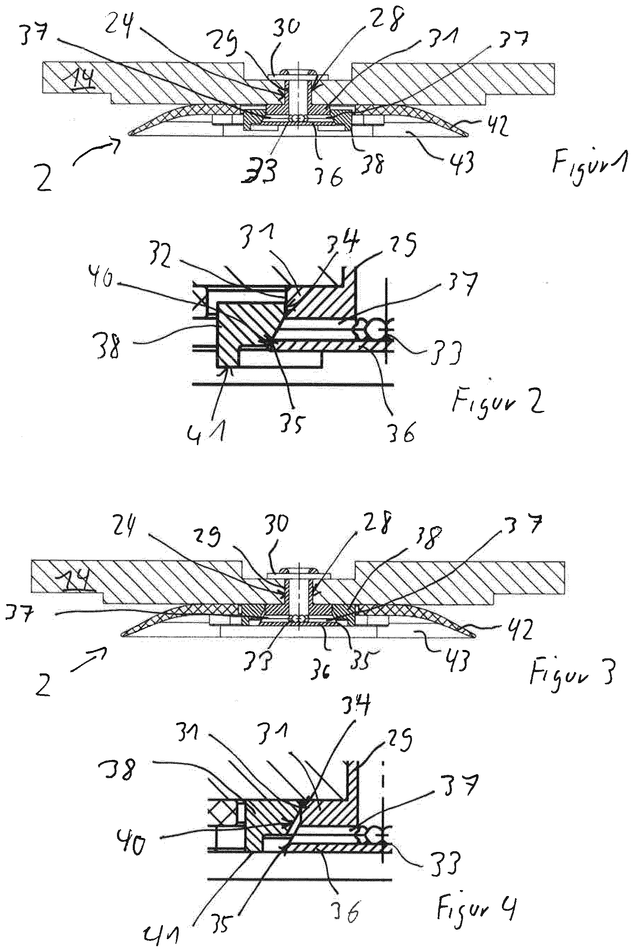

In der DE 694 09 135 T2 ist ein Unterdruckheber für Montageteile offenbart. Dieser Unterdruckheber bzw. diese Vakuumfixiervorrichtung ist ausgebildet, um ein Teil mittels Unterdruck anzusaugen und zu fixieren. Die Vorrichtung zeichnet sich dadurch aus, dass unterschiedliche Teile aufeinanderfolgend durch einfaches Umschalten von einem kleinen Vakuumkissen (kleiner Saugnapf) auf ein großes Vakuumkissen (großer Saugnapf) oder umgekehrt angesaugt und fixiert werden können. Wenn beispielsweise ein kleines Bauteil (Figur 1A) angesaugt wird, führt ein beweglicher Schaft des großen Kissenteils eine Gleitbewegung in Richtung nach unten aus. Dabei werden Saugkanäle vom großen Kissenteil und dem kleinen Kissenteil, die in kommunizierender Verbindung miteinander stehen, durch ein Dichtungselement abgesperrt, so dass nur ein Saugkanal des kleinen Kissenteils über einen Saugkanal eines festen Schaftes mit einer Luftdruckquelle (nicht dargestellt) verbunden ist. Somit erfolgt eine Saugwirkung vom Saugkanal des kleinen Kissens über den Saugkanal des festen Schafts derart, dass das kleine Teil durch das kleine Kissen angesaugt und fixiert wird. Wenn ein großes Teil (Figur 1B) mittels des großen Kissens des großen Kissenteils angesaugt und fixiert werden soll, führt der bewegliche Schaft des großen Kissenteils eine Gleitbewegung nach oben aus. Dann ist der Saugkanal des großen Kissenteils über den Saugkanal des beweglichen Schafts, den Luftkanälen und dem Saugkanal des festen Schafts in Verbindung mit der Luftdruckquelle. Der Saugkanal des kleinen Kissens ist dann mit der Luftdruckquelle über den Saugkanal des festen Schaftes verbunden. Bei dieser Ausführungsform erfolgt somit eine Saugwirkung über beide Saugwege einschließlich eines Weges, welcher von dem Saugkanal des großen Kissens über den Saugkanal des beweglichen Schaftes und den Luftkanälen zu dem Saugkanal des festen Schaftes führt. Ein weiterer Weg führt vom Saugkanal des kleinen Kissens zum Saugkanal des festen Schaftes, so dass das große Teil sowohl durch das große Kissen als auch durch das kleine Kissen angesaugt und fixiert werden kann.

Aus der US 3,602,543 A geht eine Saugnapfvorrichtung zum Anheben von Gegenständen mittels eines entsprechenden Vakuums hervor. Diese Saugnapfvorrichtung umfasst ein Rohrventil, das in einem von einem Saugnapf der Saugnapfvorrichtung begrenzten Saugraum angeordnet ist. Durch vertikale Verschiebung und Betätigung einer starren Betätigungsplatte über ein anzuhebendes Bauteil wird das Rohrventil geöffnet, so dass der Saugraum mit einem Unterdruck beaufschlagt wird. Auf diese Weise ist dann ein entsprechendes Bauteil anhebbar bzw. förderbar.

In der WO 2012/143618 A1 ist eine Vakuumsaug- bzw. Greifvorrichtung offenbart. Diese Saugnapfvorrichtung umfasst einen Saugnapf sowie einen spindelartig ausgebildeten Betätigungsstift. Hierbei ist vorgesehen, dass durch Verschieben des Betätigungsstiftes mittels eines anzuhebenden Bauteiles der Spindelstift derart verschoben wird, dass ein Ventil geöffnet wird. Auf diese Weise soll ein Unterdruck an den Saugnapf angelegt werden, um ein Bauteil anzuheben und zu transportieren. Wenn der Saugnapf eine Oberfläche eines anzuhebenden Bauteils kontaktiert, verschiebt das Bauteil den spindelförmigen Stift derart, dass ein Ansaugkanal bzw. ein entsprechendes Ventil des Ansaugkanals freigegeben wird. Wenn kein Bauteil angehoben wird, wird der spindelförmige Stift durch den Unterdruck derart verschoben, dass das Ventil geschlossen wird und kein Unterdruck am Saugnapf anliegt.

Aus der DE 32 02 087 A1 geht eine Vorrichtung zum einzelnen Abnehmen der jeweils obersten Platte von einem Stapel Batterieplatten hervor. Diese Vorrichtung umfasst eine Hubeinrichtung, mittels der ein Stapel Batterieplatten unter einem freien Ende eines Förderers gehalten und während einer fortschreitenden Abnahme der Platten anhebbar ist. Der Förderer kann ein Bandförderer mit einem umlaufenden, endlosen Förderband sein, wobei auf dem Förderband mit Saugwirkung arbeitende Greifer (Saugnapf) zum Anheben der Platten angeordnet sind. Hierbei kann ein kastenförmiges Mittelteil vorgesehen sein, welches an eine Unterdruckquelle angeschlossen ist, wobei die Saugnäpfe über Kanäle mit dem Innenraum des kastenförmigen Mittelteils verbunden sind.

SU 1771958 A1 offenbart eine Saugnapfvorrichtung mit einem ein Rohrventil aufweisenden Verbindungsanschluss zum Anlegen eines Unterdruckes an den Saugraum, das den Saugnapf begrenzt. Mit dieser Saugnapfvorrichtung wird ein Produkt durch den inneren Betätigungsnapf angesaugt und dann am Hauptsaugnapf angelegt. Unter der Wirkung des Gewichts des Produktes, wird sich eine Feder komprimieren und ein Buchsenelement längs dem Rohrventil nach unten verschieben. So wird sich eine im Rohrventil angeordnete Öffnung mit einem Saugluftkanal ausrichten. So wird ein Unterdruck an den Saugraum des Hauptsaugnapfes angelegt.

Aufgabe der vorliegenden Erfindung ist es eine einfach aufgebaute Saugnapfvorrichtung sowie einen entsprechenden Saugförderer mit zumindest einer derartigen Saugnapfvorrichtung bereitzustellen, die sicher und zuverlässig im Betrieb und einfach aufgebaut und betätigbar sind.

Eine weitere Aufgabe der vorliegenden Erfindung ist es, eine Saugnapfvorrichtung sowie einen entsprechenden Saugförderer mit einer derartigen Saugnapfvorrichtung bereitzustellen, die wartungsarm ausgebildet sind und ohne aufwendige Steuer- und Regelungseinrichtungen zum Betätigen des Saugnapfes und demgemäß wartungsarm ausgebildet sind.

Diese Aufgaben werden durch die in den unabhängigen Patentansprüchen angegebenen technischen Merkmale der erfindungsgemäßen Vorrichtung gelöst. Vorteilhafte Ausgestaltungen davon sind in den Unteransprüchen angegeben.

Erfindungsgemäß ist eine Saugnapfvorrichtung für einen Saugförderer vorgesehen. Dieser umfasst einen Saugnapf zum Aufnehmen eines Produktes, wobei der Saugnapf einen Saugraum begrenzt sowie einen Verbindungsanschluss zum Anlegen eines Unterdrucks an den Saugraum. Die vorliegende Erfindung zeichnet sich dadurch aus, dass der Verbindungsanschluss ein Rohrventil aufweist, wobei das Rohrventil ein Buchsenelement und ein kreisringförmiges Verschlusselement umfasst, und wobei das Rohrventil durch Beaufschlagung mit einem im Saugraum angeordneten und mit dem Verbindungsanschluss in kommunizierender Verbindung stehenden Betätigungssaugnapf von einer geschlossenen in eine offene Stellung überführbar ist, wobei die Betätigung des Rohrventils durch Verformung des Betätigungssaugnapfes derart erfolgt, dass die Verformung des Betätigungssaugnapfes eine Verschiebung des Verschlusselements in vertikaler Richtung bewirkt, so dass das kreisringförmige Verschlusselement des Rohrventils in eine geöffnete Stellung überführt wird.

Dadurch, dass das Rohrventil derart ausgebildet ist, um durch Beaufschlagung mit einem Produkt von einer geschlossenen in eine offene Stellung überführbar zu sein, kann auf eine aufwendige Steuerungs- und/oder Regelungseinrichtung zum Schalten des Rohrventils und damit zum Betätigen des Saugnapfes der Saugnapfvorrichtung verzichtet werden.

Die erfindungsgemäße Saugnapfvorrichtung ist auf diese Weise äußerst einfach aufgebaut, günstig in der Herstellung und sicher und zuverlässig im Betrieb.

Eine mit einem Riemen eines Saugförderers verbundene Seite der Saugnapfvorrichtung wird im Folgenden als Verbindungsseite und eine das Produkt aufnehmende Seite der Saugnapfvorrichtung wird im Folgenden als Betätigungsseite bezeichnet.

Der Saugnapf und der Betätigungssaugnapf sind vorzugsweise relativ zueinander ortsfest angeordnet.

Der Saugnapf und der Betätigungssaugnapf sind vorzugsweise aus einem elastischen Kunststoff, wie z.B. einem Gummi ausgebildet, so dass Saugglocken des Saugnapfes und des Betätigungssaugnapfes elastisch verformbar ausgebildet sind.

Das bedeutet der Betätigungssaugnapf und der Saugnapf sind in Ihrer Anordnung bzgl. einer Aufnahmeeinrichtung, wie z.B. einem Riemen eines Saugförderers, in vertikaler Richtung nicht verschiebbar sondern mit Ihren Verbindungsseiten fest und starr mit dieser verbunden.

Bei der vorliegenden Erfindung erfolgt eine Betätigung des Rohrventils durch Verformung, bzw. durch elastische Verformung, des Betätigungssaugnapfes derart, dass die Verformung des Betätigungssaugnapfes eine Verschiebung des Verschlusselementes in vertikaler Richtung bewirkt, so dass das kreisringförmige Verschlusselement des Rohrventils in eine geöffnete Stellung überführt wird.

Bei der vorliegenden Erfindung ist hingegen vorgesehen, den Betätigungssaugnapf nicht zum Transportieren von Bauteilen zu verwenden, sondern dieser ist lediglich zur Betätigung bzw. zum Öffnen des Rohrventils des großen Saugnapfes zum Aufnehmen eines Produktes ausgebildet.

Hierbei ist insbesondere vorgesehen, dass das Schalten des Rohrventils derart erfolgt, dass ein Produkt mittels seines Eigengewichts und/oder mittels seiner entsprechenden Hub- bzw. Andrückeinrichtung an den Betätigungssaugnapf andrückbar ist, wobei diese in vertikaler Richtung von der Betätigungsseite in Richtung der Verbindungsseite verformt bzw. zusammendrückt und im Anschluss das Rohrventil mit einer Kraft in der gleichen vertikalen Richtung derart beaufschlagt, dass das Rohrventil von einer geschlossenen in eine geöffnete Stellung überführt wird. Hierbei ist vorgesehen einen Unterdruck über eine Unterdrucköffnung und über eine Verbindung des Rohrventils mit einem Unterdruckraum innerhalb kurzer Zeit an den Betätigungssaugraum anzulegen. Auf diese Weise wird zunächst ein Bauteil angesaugt, wobei anschließend das kreisringförmige Verschlusselement des Rohrventils durch Verformung des Betätigungssaugnapfes betätigt wird. Durch die Verschiebung des Verschlusselementes in vertikaler Richtung wird der Ansaugkanal geöffnet und ein Unterdruck an den Saugraum des Saugnapfes angelegt und ein Produkt am Saugnapf fixiert. Auf diese Weise ist ein Produkt mittels des durch den Saugnapf begrenzten Saugraums sicher und zuverlässig transportierbar.

Das Schalten bzw. Betätigen des Rohrventils erfolgt zum Aufnehmen eines Produkts derart, dass ein Produkt mittels seines Eigengewichts und/oder mittels einer entsprechenden Hub- bzw. Andrückeinrichtung, wie z.B. einem Andrückband, -rollen oder -riemen an einen Saugnapf bzw. eine Kunststoffglocke andrückbar ist, diese in vertikaler Richtung von der Betätigungsseite in Richtung Verbindungsseite verformt bzw. zusammendrückt und im Anschluss das Rohrventil mit einer Kraft in der gleichen vertikalen Richtung derart beaufschlagt, dass das Rohrventil von einer geschlossenen Stellung in eine geöffnete Stellung überführt wird, sodass ein entsprechendes Produkt mittels des durch den Saugnapfes begrenzten Saugraum sicher und zuverlässig gehalten wird.

Aufgrund der einfachen Ausbildung und Betätigung der Ventile werden nur geringe Mengen/Massen bzw. Volumenströme an Luft benötigt, um diese zu steuern. Auf diese Weise genügt zumeist eine einzige Unterdruckpumpe zum Betätigen der Saugnapfvorrichtung/en, die im Vergleich zu bekannten Systemen eine geringere Leistung benötigt.

Das Rohrventil kann ein Buchsenelement und ein das Buchsenelement konzentrisch umgebendes in etwa kreisringförmig ausgebildetes Verschlusselement umfassen.

Das Buchsenelement kann einen Buchsendichtabschnitt und ein Buchsenführungsabschnitt aufweisen, wobei das Verschlusselement einen Verschlussdichtabschnitt und einen Verschlussführungsabschnitt aufweist, die korrespondierend zum Buchsendichtabschnitt und zum Buchsenführungsabschnitt ausgebildet sind, wobei das Verschlusselement des Rohrventils vom Produkt betätigbar ist.

Da das Rohrventil einfach aufgebaut ist und aus mechanisch einfach und kostengünstig herstellbaren Bauteilen besteht, ist die Saugnapfvorrichtung kostengünstig herstellbar und sicher und zuverlässig im Betrieb.

Gemäß einem weiteren Aspekt ist erfindungsgemäß eine weitere Saugnapfvorrichtung für einen Saugförderer vorgesehen, die ein ähnliches Rohrventil, wie die vorstehend beschriebene Saugnapfvorrichtung verwendet. Diese umfasst einen Saugnapf zum Aufnehmen eines Produktes, wobei der Saugnapf einen Saugraum begrenzt sowie einen Verbindungsanschluss zum Anlegen eines Unterdrucks an den Saugraum. Diese Erfindung zeichnet sich dadurch aus, dass der Verbindungsanschluss ein Rohrventil aufweist, wobei das Rohrventil durch Beaufschlagung mit einem im Saugraum angeordneten und mit dem Verbindungsanschluss in kommunizierender Verbindung stehenden Betätigungssaugnapf von einer geschlossenen in eine offene Stellung überführbar ist.

Das Rohrventil kann ein Buchsenelement und ein in etwa kreisringförmiges Verschlusselement umfassen, wobei am Buchsenelement einen Buchsendichtabschnitt und einen Buchsenführungsabschnitt ausgebildet sind, und das Verschlusselement einen Verschlussdichtabschnitt und einen Verschlussführungsabschnitt aufweist, die korrespondierend zum Buchsendichtabschnitt und zum Buchsenführungsabschnitt ausgebildet sind. Das Verschlusselement kann vom Betätigungssaugnapf derart betätigbar sein, dass das Verschlusselement einen in den Saugnapf mündenden Ansaugkanal öffnet und ein Unterdruck an den Saugraum zwischen Produkt und Saugnapf anlegt.

Der Betätigungssaugnapf kann eine permanent geöffnete und mit dem Verbindungsanschluss verbundene Unterdrucköffnung aufweisen. Diese Unterdrucköffnung weist einen relativ kleinen Durchmesser auf, sodass, wenn keine Produkte vom der Saugnapfvorrichtung angesaugt werden, lediglich ein geringer Unterdruckverlust im System bzw. einem Saugförderer entsteht. Diese Bohrung ist ausgebildet, um einen vom Betätigungssaugnapf begrenzten Raum des Unterdruckraums mit einem Unterdruck zu beaufschlagen bzw. einen Unterdruck an diesen anzulegen.

Gemäß dieser Saugnapfvorrichtung ist vorgesehen ein Produkt mit dem inneren Betätigungssaugnapf anzusaugen bzw. kurzfristig zu fixieren.

Dabei wird ein Unterdruck über die Unterdrucköffnung und über die Verbindung des Rohrventils mit dem Unterdruckraum innerhalb kurzer Zeit an den Betätigungssaugraum angelegt. Auf diese Weise wird zunächst das Produkt angesaugt und dann das kreisringförmige Verschlusselement des Rohrventils durch Verformung des Betätigungssaugnapfes betätigt.

Der Betätigungssaugnapf somit über die Unterdrucköffnung permanent mit einem Unterdruck derart beaufschlagt, dass ein Produkt angesaugt wird. Durch das Ansaugen erfolgt eine Verformung des Betätigungssaugnapfes derart, dass dieser das Verschlusselement von der Betätigungsseite in Richtung Verbindungsseite verschiebt und öffnet. Auf diese Weise wird der in den Saugnapf mündende Ansaugkanal geöffnet, sodass ein Produkt sicher fixiert ist und mittels eines entsprechenden Saugförderers transportiert werden kann.

Durch die Verschiebung des Verschlusselements in vertikaler Richtung wird der Ansaugkanal geöffnet und ein Unterdruck an den Saugraum des Saugnapfes angelegt und ein Produkt am Saugnapf fixiert.

Gemäß dieser Ausführungsform müssen die Produkte nicht angehoben werden, um von der Saugnapfvorrichtung aufgenommen und transportiert zu werden. Demgemäß ist keine Andrückeinrichtung oder dergleichen notwendig.

Als Produkt können plattenförmige Transportgüter wie z.B. Laminat, Papier, Blech kartenvorgesehen sein.

Weiterhin ist ein Saugförderer vorgesehen. Der Saugförderer umfasst ein Unterdruckprofil mit einem Unterdruckraum, einer Antriebsrolle, eine Umlenkrolle und ein das Unterdruckprofil und die Rollen umlaufend umgebenden Riemen. Dieser Saugförderer zeichnet sich dadurch aus, dass auf dem Riemen zumindest eine vorstehend beschriebene und vorzugsweise in einer Förderrichtung mehrere gleich beabstandet voneinander angeordnete Saugnapfvorrichtungen befestigt sind, die mit dem Unterdruckraum des Unterdruckprofils in einen wiederverschließbaren kommunizierenden Verbindung stehen.

Durch die Verwendung einer erfindungsgemäßen Saugnapfvorrichtung weist der Saugförderer die vorstehend ausgeführten Vorteile auf.

Weiterhin kann der Saugförderer zumindest ein L-förmig ausgebildetes Halteprofil und vorzugsweise zwei L-förmig ausgebildete Halteprofile aufweisen, die auf einer in vertikaler Richtung unten liegenden Seite des Saugförderers angeordnet sind und derart ausgebildet sind, dass eine Bewegung des Riemens in vertikaler Richtung nach unten von einem horizontalen Halteschenkel des L-förmig ausgebildeten Halteprofiles begrenzt wird.

Mittels des L-förmig ausgebildeten Halteprofils wird ein Durchhängen eines Riemens eines Saugförderers in vertikaler Richtung nach unten effizient verhindert bzw. begrenzt.

Das Halteprofil gewährleistet somit einen präzisen, sicheren und zuverlässigen Betrieb des Saugförderers.

Ein vertikaler Befestigungsschenkel des Halteprofils kann mit dem Unterdruckprofil unmittelbar oder mittelbar verbunden sein.

Der Riemen kann vorzugsweise als Zahnriemen ausgebildet sein, wobei die Antriebsrolle entsprechende Zähne zum Antreiben des Zahnriemens aufweist.

Das Unterdruckprofil bildet einen Transportabschnitt zum Fördern von Produkten aus. Dieser Transportabschnitt ist vorzugsweise in vertikaler Richtung unterhalb des Unterdruckprofils vorgesehen, so dass ein oder mehrere Produkte an den Saugnapfvorrichtungen hängen transportierbar sind.

Der Transportabschnitt kann jedoch auch in vertikaler Richtung oberhalb des Unterdruckprofils oder auch beidseitig bzw. in vertikaler Richtung ober- und unterhalb des Unterdruckprofils ausgebildet sein.

Im Saugabschnitt kann ein Unterdruck über den Saugraum des Unterdruckprofils und das geöffnete Rohrventil des Saugnapfes an den Saugnapf anlegbar sein, wobei im Bereich einer der Rollen, vorzugsweise im Bereich der Antriebswelle ein Abgabeabschnitt zum Ablegen von Produkten ausgebildet ist, in dem das Rohrventil des Saugnapfes geschlossen ist.

Zwischen Riemen und Unterdruckprofil kann eine Ansaugleiste angeordnet sein, die ausgebildet ist, um das Unterdruckprofil räumlich von dem Riemen zu trennen.

Weiterhin kann die Ansaugleiste eine Gleit- und Dichtungsführung für den Riemen ausbilden. Auf diese Weise wird eine lineare Führung sowohl der mit dem Riemen verbundenen Saugnäpfe als auch des Riemens selbst, linear in einer Umlaufrichtung des Riemens gewährleistet.

Der Unterdruckraum des Unterdruckprofils kann mit einer Unterdruckeinrichtung, wie z.B. einer Unterdruckpumpe, verbunden sein.

Der Saugnapf und der Betätigungssaugnapf sind vorzugsweise bzgl. des Riemen des Saugförderers ortsfest angeordnet und mit diesem fest verbunden sind und in vertikaler Richtung nicht verschiebbar ausgebildet.

Die Erfindung wird im Folgenden anhand der Figuren näher erläutert. Diese zeigen in
- Figur 1:: eine mit einem Riemen verbundene Saugnapfvorrichtung in einer seitlich geschnittenen Ansicht mit einem Rohrventil im geschlossenen Zustand,
- Figur 2:: ein Rohrventil der Saugnapfvorrichtung aus Figur 1 in einer Detailansicht im geschlossenen Zustand,
- Figur 3:: die Saugnapfvorrichtung mit Riemen aus Figur 1 in einer seitlich geschnittenen Ansicht, wobei das Rohrventil des Saugnapfes in einem geöffneten Zustand ist,
- Figur 4:: das Rohrventil der Saugnapfvorrichtung aus Figur 3 in einer Detailansicht im geöffneten Zustand,
- Figur 5:: eine seitlich geschnittene Querschnittsdarstellung eines erfindungsgemäßen Saugförderers,
- Figur 6:: eine perspektivische Teilansicht eines erfindungsgemäßen Saugförderers,
- Figur 7:: die Darstellung des Saugförderers aus Figur 6 in einer längsgeschnittenen perspektivischen Darstellung,
- Figur 8:: eine mit einem Riemen eines Saugförderers verbundene erfindungsgemäße Saugnapfvorrichtung in einer seitlich geschnittenen Ansicht mit einem Rohrventil in einem geöffneten Zustand, und
- Figur 9:: die Saugnapfvorrichtung aus Figur 8 in einer seitlich geschnittenen Ansicht, wobei das Rohrventil des Saugnapfes in einem geschlossenen Zustand ist.

Im Folgenden wird ein Saugförderer 1 mit einer Saugnapfvorrichtung 2 beispielhaft anhand eines Ausführungsbeispiels erläutert (Figuren 1 bis 7).

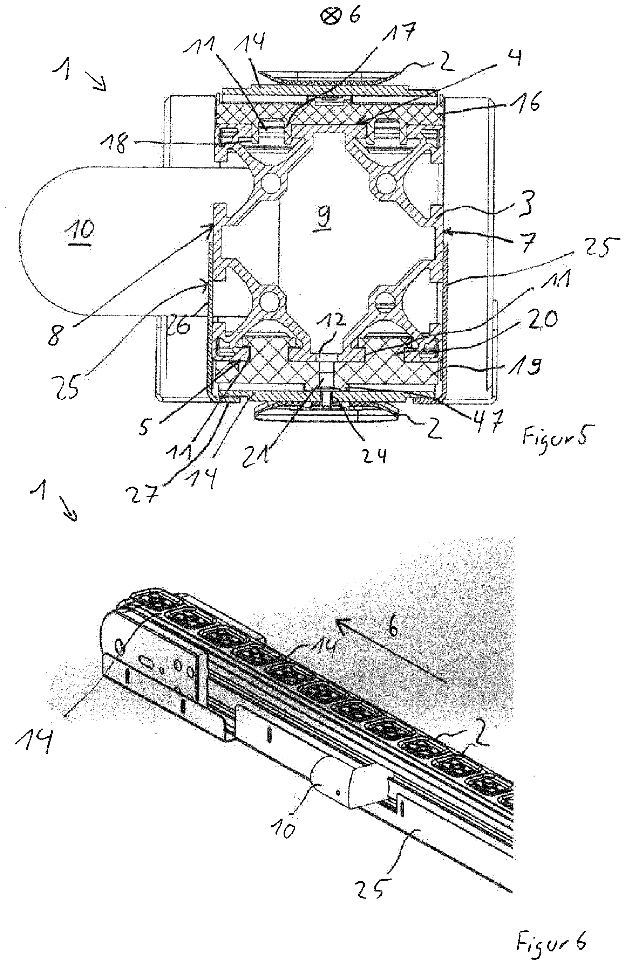

Der Saugförderer 1 umfasst eine langgestreckte Profilleiste (Figuren 5 bis 7), die als Unterdruckprofil 3 ausgebildet ist und einen in etwa rechtförmigen und vorzugsweise einen in etwa quadratischen Querschnitt aufweist.

Das Unterdruckprofil 3 weist demgemäß eine in vertikaler Richtung oben liegende Oberwandung 4 sowie eine in vertikaler Richtung unten liegende Unterwandung 5 und zwei sich in einer Förderrichtung 6 erstreckende Seitenwandungen 7 und 8 auf.

Ein von den Wandungen 4, 5, 7 und 8 begrenzter Raum wird als Unterdruckraum 9 bezeichnet. Dieser Unterdruckraum 9 ist über einen entsprechenden Unterdruckanschluss 10 mit einer Unterdruckeinrichtung (nicht dargestellt) bzw. einer Einrichtung zum Anlegen eines Unterdrucks an den Unterdruckraum 9 verbunden.

Der Unterdruckraum 9 ist gegenüber der Umgebung bis auf den Unterdruckanschluss 10 und Durchgangsbohrungen 12, die im Folgenden noch beschrieben werden luft- bzw. fluiddicht gegenüber der Umgebung abgeschlossen bzw. ausgebildet.

Alle weiteren im Folgenden beschriebenen technischen Merkmale des Unterdruckprofils 3 bzw. des Saugförderers 1 beeinflussen die Fluiddichtigkeit des Unterdruckraums 9 nicht.

In der Oberwandung 4 und der Unterwandung 5 sind sich in einer Förderrichtung 6 bzw. in einer Längsrichtung des Unterdruckprofils 3 jeweils zwei beabstandet voneinander angeordnete Verbindungseinrichtungen 11, die als schlitzförmige Ausnehmungen ausgebildet sind, vorgesehen.

Weiterhin sind in der Unterwandung 5 des Unterdruckprofils in Förderrichtung 6 gleich beabstandet voneinander angeordnete Durchgangsbohrungen 12 ausgebildet. Eine derartige Anordnung der Durchgangsbohrungen ist vorgesehen wenn der Saugförderer 1 zum hängenden Transport von Produkten entlang der Unterwandung ausgebildet ist.

Zum aufliegenden Transport von Produkten sind die Durchgangsbohrungen entsprechend in der Oberwandung 4 ausgebildet.

An einem in Förderrichtung 6 vorne liegenden Ende des Unterdruckprofils 3 ist geringfügig beabstandet zum Unterdruckprofil 3 eine Antriebsrolle 13 vorgesehen. Der Durchmesser der Antriebsrolle 13 entspricht in etwa einer Höhe des Unterdruckprofils 3 in vertikaler Richtung. Die Antriebsrolle 13 ist mit einer Antriebseinrichtung (nicht dargestellt) verbunden, um die Antriebsrolle 13 in Förderrichtung 6 in eine Drehbewegung zu versetzen. Weiterhin sind an der Antriebsrolle 13 Zähne zum Übertragen der Drehbewegung der Antriebsrolle 13 auf einen umlaufenden Riemen 14 angeformt.

An einem entgegen der Förderrichtung 6 liegenden Ende des Unterdruckprofils 3 ist beabstandet zum Unterdruckprofil 3 eine Umlenkrolle (nicht dargestellt) angeordnet. Ein Durchmesser dieser Umlenkrolle 15 entspricht ebenfalls in etwa der Höhe des Unterdruckprofils 3 in vertikaler Richtung. An der Umlenkrolle 15, die frei drehbar gelagert ist, sind ebenfalls Zähne am äußeren Umfang angeformt.

Der Riemen 14 umgibt die Antriebsrolle 13, das Unterdruckprofil 3 bzw. dessen Oberwandung 4 und Unterwandung 5 sowie die Umlenkrolle 15 umlaufend.

In vertikaler Richtung oberhalb bzw. auf der Oberwandung 4 des Unterdruckprofils 3 ist eine Führungsleiste 16 angeordnet. Die Führungsleiste 16 weist unterseitig bzw. in vertikaler Richtung unten zwei sich in Förderrichtung 6 erstreckende langgestreckte Halteelemente 17 auf. Die Führungsleiste 16 dient zur Verminderung des Reibungswiderstandes des Riemens 14 beim Umlaufen sowie zu dessen Führung in Förderrichtung 6.

Die stegförmigen Haltelemente 17 weisen an ihrer in vertikaler Richtung unteren Kante sich in Richtung der Seitenwandungen 7 und 8 erstreckende Rastnasen 18 auf. Mittels dieser Rastnasen sind die Halteelemente 17 und die damit verbundene Führungsleiste 16 in den Verbindungseinrichtungen 11 des Unterdruckprofils 3 fixiert. Die Führungsleiste 16 ist vorzugsweise aus einem Kunststoff wie z.B. Polyoxymethylen (POM) ausgebildet An der Unterwandung 5 des Unterdruckprofils 3 ist eine Saugleiste 19 angeordnet.

Die Saugleiste 19 weist in vertikaler Richtung oben bzw. oberseitig im Querschnitt in etwa T-förmig ausgebildete und einstückig an der Saugleiste 19 angeformte Verbindungselemente 20 auf. Die Verbindungselemente 20 sind in den Verbindungseinrichtungen 11 der Unterwandung 5 fixiert, um die Saugleiste 19 mit dem Unterdruckprofil 3 zu verbinden.

Im Bereich zwischen den Verbindungselementen 20 der Saugleiste 19 sind entsprechend der bzw. korrespondierend zur Anordnung der Durchgangsbohrungen 12 des Unterdruckprofils Durchgangsöffnungen 21 ausgeformt.

Die Durchgangsöffnungen 21 der Saugleiste 19 sind mit Ringstegen 47 versehen. Diese Ringstege 47 liegen am Riemen 14 an.

Der das Unterdruckprofil 3, die Antriebsrolle 13 und die Umlenkrolle 15 umgebende Riemen 14 ist als Zahnriemen ausgebildet und weist an seiner in Richtung Unterdruckprofil 3, Antriebsrolle 13 und Umlenkrolle 15 weisenden Innenwandung 22 eine Verzahnung (nicht dargestellt) auf, die korrespondierend zu den Zähnen der Antriebsrolle 13 geformt ist.

Entlang der Förderrichtung 6 sind im Riemen 14 gleich beabstandet voneinander angeordnete Durchgangsöffnungen 24 ausgebildet.

Im Folgenden wird ein erfindungsgemäßes Halteprofil 25 zum Verhindern eines unterseitigen Durchhängens des Riemens 14 beschrieben.

Das Halteprofil 25 ist im Querschnitt in etwa L-förmig ausgebildet und mit einem vertikalen Schenkel 26 an jeder der Seitenwandungen 7 und 8 befestigt. Ein horizontaler Schenkel 27 des Halteprofils 25 beaufschlagt den Riemen 14 im Bereich der Unterwandung 5 des Unterdruckprofils mit einer in vertikaler Richtung nach oben wirkenden Kraft bzw. begrenzt ein Durchhängen des Riemens 14 in vertikaler Richtung. Demgemäß kann das Halteprofil 25 auch als Anschlag bzw. Begrenzung zum Verhindern eines Durchhängens des Riemens 14 in vertikaler Richtung nach unten bezeichnet werden.

Das Unterdruckprofil bildet einen Transportabschnitt zum Fördern von Produkten aus in dem ein Unterdruck über das geöffnete Rohrventil des Saugnapfes an die Saugnapfvorrichtungen anlegbar ist und im Bereich der Führungsrolle oder der Antriebsrolle ein Abgabeabschnitt zum Ablegen von Produkten ausgebildet ist in dem das Rohrventil des Saugnapfes geschlossen ist

Im Folgenden wird eine Saugnapfvorrichtung 2 beschrieben (Figuren 1 bis 4).

Die Saugnapfvorrichtung 2 umfasst ein Rohrventil 28.

Das Rohrventil 28 weist einen rohrförmigen Verbindungsanschluss 29 auf, mit dem das Rohrventil 28 bzw. die Saugnapfvorrichtung 2 fluiddicht mit der Saugleiste 19 verbunden ist.

Der rohrförmige Verbindungsanschluss 29 ist in den Durchgangsöffnungen 24 des Riemens 14 angeordnet und fluiddicht mittels eines Verbindungsrings 30 mit diesem verbunden.

Das Rohrventil 28 ermöglicht eine kommunizierende Verbindung vom Unterdruckraum über die Saugleiste 19 zu einem Saugraum 43 der Saugnapfvorrichtung 2. Der Saugraum 43 wird von einem Saugnapf 42 der Saugnapfvorrichtung 2 begrenzt.

An einem dem Unterdruckraum 9 gegenüberliegenden Ende des rohrförmigen Verbindungsanschlusses 29 ist ein in etwa kreisringförmiges Buchsenelement 31 angeformt, das eine in radialer Richtung außen liegende und in vertikaler Richtung verlaufende Mantelwandung aufweist, die einen Buchsenführungsabschnitt 32 des Buchsenelements 31 ausbildet.

Über sich in vertikaler Richtung erstreckende Verbindungsstege 33 ist der Buchsenführungsabschnitt 32 mit einem in etwa scheibenförmigen Buchsendichtelement 36 des Buchsenelements 31 verbunden. Eine in vertikaler Richtung verlaufende Mantelwandung des Buchsendichtelements 36 ist in etwa ausgehend vom rohrförmigen Verbindungsanschluss 29 konisch aufweitend ausgebildet und bildet einen Buchsendichtabschnitt 35 aus.

Zwischen dem rohrförmigen Verbindungsanschluss 29 und Buchsendichtelement 36 ist ein radial umlaufender Ansaugkanal 37 vorgesehen.

Weiterhin weist das Rohrventil 28 ein Verschlusselement 38 auf. Das Verschlusselement 38 ist in etwa kreisringförmig ausgebildet und bildet an seiner inneren Mantelwandung einen sich in vertikaler Richtung und radial umlaufenden Verschlussführungsabschnitt 39 aus.

Der Verschlussführungsabschnitt 39 bzw. dessen Durchmesser ist in etwa korrespondierend zum Buchsenführungsabschnitt 32 ausgebildet, sodass ein Verschieben des Verschlusselements 38 in vertikaler Richtung bezüglich des Buchsenelements 31 des Rohrventils 28 möglich ist.

Im Anschluss an den Verschlussführungsabschnitt 39 ist ein konisch aufweitender Verschlussdichtabschnitt 40 ausgebildet, dessen Konus korrespondierend zum Buchsendichtabschnitt 35 derart ausgebildet ist, dass der Ansaugkanal 37 des Rohrventils fluiddicht verschließbar ist.

Im Anschluss an den Verschlussdichtabschnitt 40 ist ein sich in vertikaler Richtung erstreckender Betätigungssteg 41 des Rohrventils 28 ausgebildet.

Weiterhin weist die Saugnapfvorrichtung 2 den das Rohrventil konzentrisch umgebenden und glockenförmig ausgebildeten Saugnapf 42 auf.

Durch eine Verschiebung des Verschlusselements 38 des Rohrventils 28, wird eine Verbindung vom Unterdruckraum 9 über die Durchgangsbohrung 12, die Durchgangsöffnung 21 sowie die Durchgangsöffnung 24 und den Ansaugkanal 37 zu einem vom Saugnapf 42 begrenzten Saugraum 43 geöffnet oder geschlossen.

Im Folgenden wird der Betrieb bzw. das Aufnehmen und Ablegen von Produkten mittels einer Saugnapfvorrichtung 2 des Saugförderers 1 beschrieben.

Zum Aufnehmen ist vorgesehen mittels einer Andrückeinrichtung (nicht dargestellt) ein Produkt wie z. B. ein Laminat von unten bzw. in vertikaler Richtung nach oben an einen entgegen der Förderrichtung 6 und im Bereich der Unterwandung 5 angeordneten Saugnapf 42 der Saugnapfvorrichtung 2 zu drücken. Durch Verformung eines radial umlaufenden Randes des Saugnapfes 42 wird dieser elastisch verformt, sodass sich seine Höhe in vertikaler Richtung reduziert. Dann drückt eine in vertikaler Richtung obere Oberfläche des Produkts gegen den Betätigungssteg des Verschlusselements 38, sodass ein Unterdruck über den Unterdruckraum 9 und die entsprechenden Öffnungen an den Saugraum 43 angelegt wird. Auf diese Weise wird das Produkt unterseitig am Saugförderer bzw. an der entsprechenden Saugnapfvorrichtung 1 gehalten.

Der Riemen 14 wird über die Antriebsrolle 13 in Förderrichtung 6 bewegt.

Sobald die Saugnapfvorrichtung 2 sich in Förderrichtung in den Bereich der Antriebsrolle 13 bewegt bzw. den Bereich der Antriebsrolle 13 erreicht hat, wird der Saugraum 43 der Saugnapfvorrichtung 2 nicht mehr mit einem Unterdruck beaufschlagt bzw. ein Unterdruck an dieses angelegt. Dadurch bewegt sich das Verschlusselement 38 des Rohrventils 29 im vorliegenden Beispiel in vertikaler Richtung nach unten, sodass das Produkt aufgrund seiner Gewichtskraft bzw. der Schwerkraft an einem vorbestimmten Ablage- oder Stapelort abgelegt wird.

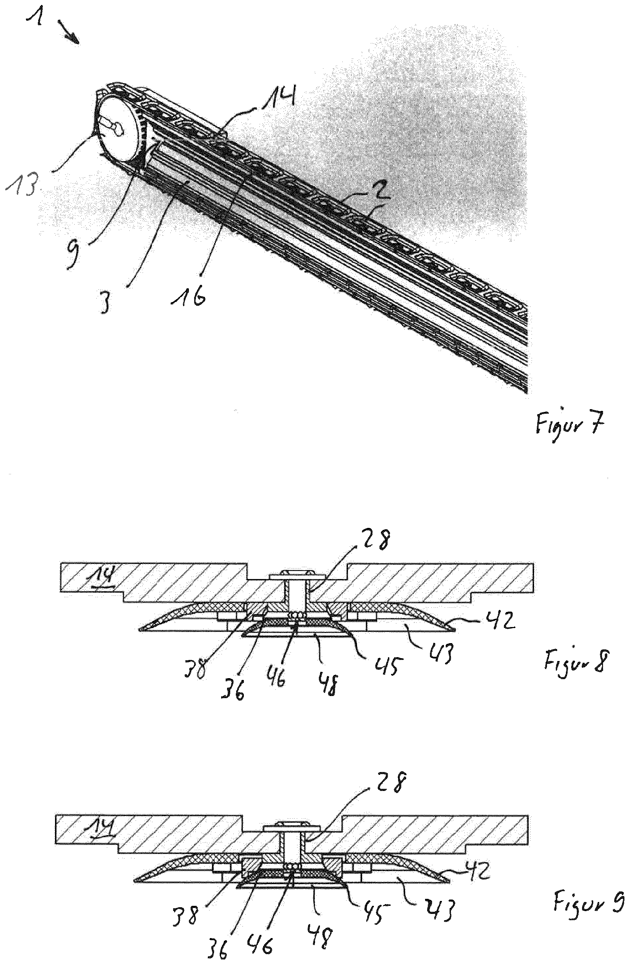

Im Folgenden wird eine erfindungsgemäße Saugnapfvorrichtung 2 beschrieben (Figuren 8 und 9).

Diese Saugnapfvorrichtung 2 umfasst, sofern nichts anderes beschrieben ist, die gleichen technischen Merkmale wie die vorstehend beschriebene Saugnapfvorrichtung 2. Gleiche Bauteile bzw. gleiche Merkmale sind mit den gleichen Bezugszeichen versehen.

Das Rohrventil 28 dieser Saugnapfvorrichtung 2 ist mit einem Betätigungssaugnapf 45 verbunden. Dieser Betätigungssaugnapf 45 ist im Saugraum 43 des Saugnapfes 42 angeordnet.

Der Betätigungssaugnapf 45 ist mit dem Buchsendichtelement 36 des Rohrventils 28 verbunden, wobei eine kommunizierende Verbindung zum Verbindunganschluss 29 zum Anlegen eines Unterdrucks an einen Betätigungssaugraum 48 über eine Unterdrucköffnung 46 vorgesehen ist.

Der Betätigungssaugnapf 45 begrenzt den Betätigungssaugraum 48.

Im Folgenden wird ein Verfahren zum Betrieb der erfindungsgemäßen Saugnapfvorrichtung 2 in Verbindung mit einem Saugförderer 1 beschrieben.

Gemäß dieser Saugnapfvorrichtung 2 ist vorgesehen ein Produkt mit dem inneren Betätigungssaugnapf 45 anzusaugen bzw. kurzfristig zu fixieren.

Dabei wird ein Unterdruck über die Unterdrucköffnung 46 und über die Verbindung des Rohrventils 28 mit dem Unterdruckraum 9 innerhalb kurzer Zeit an den Betätigungssaugraum 48 angelegt. Auf diese Weise wird zunächst das Produkt angesaugt und dann das kreisringförmige Verschlusselement 38 des Rohrventils 28 durch elastische Verformung des Betätigungssaugnapfes 45 betätigt.

Durch die Verschiebung des Verschlusselements in vertikaler Richtung wird der Ansaugkanal 37 geöffnet und ein Unterdruck an den Saugraum 43 des Saugnapfes 42 angelegt und ein Produkt am Saugnapf 42 fixiert.

Wenn kein Produkt angesaugt ist, gibt es nur durch die kleine Bohrung der Unterdrucköffnung Verluste. Diese Bohrung ist jedoch notwendig um den kleineren Saugnapf erst leer zu saugen.

Weiterhin ist vorgesehen, dass ein erfindungsgemäßer Saugförderer 1 nicht nur mit Einzelsträngen funktionieren, sondern auch als Band ausgeführt werden kann, so dass quer zur Transportrichtung 6 zwei oder mehr Saugnapfvorrichtung auf dem Riemen 14 angeordnet sind.

Der Saugnapf 42 und der Betätigungssaugnapf 45 sind relativ zueinander ortsfest angeordnet.

Der Saugnapf 42 und der Betätigungssaugnapf 45 sind aus einem elastischen Kunststoff, wie z.B. einem Gummi ausgebildet, so dass Saugglocken des Saugnapfes und des Betätigungssaugnapfes elastisch verformbar ausgebildet sind.

Das bedeutet der Betätigungssaugnapf 45 und der Saugnapf 42 sind in Ihrer Anordnung bzgl. einer Aufnahmeeinrichtung, wie z.B. einem Riemen eines Saugförderers, in vertikaler Richtung nicht verschiebbar sondern mit Ihren Verbindungsseiten fest und starr mit dieser verbunden.

Bei der vorliegenden Erfindung erfolgt eine Betätigung des Rohrventils durch Verformung, bzw. durch elastische Verformung, des Betätigungssaugnapfes 45 derart, dass die Verformung des Betätigungssaugnapfes 45 eine Verschiebung des Verschlusselementes 38 in vertikaler Richtung bewirkt, so dass das kreisringförmige Verschlusselement 38 des Rohrventils 28 in eine geöffnete Stellung überführt wird.

Bei der vorliegenden Erfindung ist hingegen vorgesehen, den Betätigungssaugnapf 45 nicht zum Transportieren von Bauteilen verwendet wird, sondern dieser ist lediglich zur Betätigung bzw. zum Öffnen des Rohrventils 28 des großen Saugnapfes 42 zum Aufnehmen eines Produktes ausgebildet.

Hierbei ist insbesondere vorgesehen, dass das Schalten des Rohrventils 28 derart erfolgt, dass ein Produkt mittels seines Eigengewichts und/oder mittels seiner entsprechenden Hub- bzw. Andrückeinrichtung an den Betätigungssaugnapf 45 angedrückt wird, wobei der Betätigungssaugnapf 45 in vertikaler Richtung von der Betätigungsseite in Richtung der Verbindungsseite verformt bzw. zusammendrückt und im Anschluss das Rohrventil 28 mit einer Kraft in der gleichen vertikalen Richtung derart beaufschlagt, dass das Rohrventil 28 von einer geschlossenen in eine geöffnete Stellung überführt wird. Hierbei ist vorgesehen einen Unterdruck über eine Unterdrucköffnung und über eine Verbindung des Rohrventils 28 mit einem Unterdruckraum innerhalb kurzer Zeit an den Betätigungssaugraum 48 anzulegen. Auf diese Weise wird zunächst ein Bauteil angesaugt, wobei anschließend das kreisringförmige Verschlusselement 38 des Rohrventils 28 durch Verformung des Betätigungssaugnapfes 45 betätigt wird. Durch die Verschiebung des Verschlusselementes 38 in vertikaler Richtung wird der Ansaugkanal 37 geöffnet und ein Unterdruck an den Saugraum 43 des Saugnapfes 42 angelegt und ein Produkt am Saugnapf 42 fixiert. Auf diese Weise ist ein Produkt mittels des durch den Saugnapf 42 begrenzten Saugraums 43 sicher und zuverlässig transportierbar.

### Bezugszeichenliste

- 1.: Saugförderer
- 2.: Saugnapfvorrichtung
- 3.: Unterdruckprofil
- 4.: Oberwandung
- 5.: Unterwandung
- 6.: Förderrichtung
- 7.: Seitenwandung
- 8.: Seitenwandung
- 9.: Unterdruckraum
- 10.: Unterdruckanschluss
- 11.: Führungseinrichtung
- 12.: Durchgangsbohrung
- 13.: Antriebsrolle
- 14.: Riemen
- 15.: Umlenkrolle
- 16.: Führungsleiste
- 17.: Halteelement
- 18.: Rastnase
- 19.: Saugleiste
- 20.: Verbindungselement
- 21.: Durchgangsöffnung
- 22.: Innenwandung
- 23.: Verzahnung
- 24.: Durchgangsöffnung
- 25.: Halteprofil
- 26.: Vertikaler Schenkel
- 27.: Horizontaler Schenkel
- 28.: Rohrventil
- 29.: Rohrförmiger Verbindungsanschluss
- 30.: Verbindungsring
- 31.: Buchsenelement
- 32.: Buchsenführungsabschnitt
- 33.: Verbindungsstege
- 34.: Buchsenführungsabschnitt
- 35.: Buchsendichtabschnitt
- 36.: Buchsendichtelement
- 37.: Ansaugkanal
- 38.: Verschlusselement
- 39.: Verschlussführungsabschnitt
- 40.: Verschlussdichtabschnitt
- 41.: Betätigungselement
- 42.: Saugnapf
- 43.: Saugraum
- 44.: Radial umlaufender Rand
- 45.: Betätigungssaugnapf
- 46.: Unterdrucköffnung
- 47.: Ringsteg
- 48.: Betätigungssaugraum

## Patentansprüche

1. Saugnapfvorrichtung für einen Saugförderer umfassend
einen Saugnapf (42) zum Aufnehmen eines Produktes, wobei der Saugnapf (42) einen Saugraum (43) begrenzt,
einen Verbindungsanschluss (29) zum Anlegen eines Unterdruckes an den Saugraum (43), **dadurch gekennzeichnet,**
**dass** der Verbindungsanschluss (29) ein Rohrventil (28) aufweist, wobei das Rohrventil (28) ein Buchsenelement (31) und ein kreisringförmiges Verschlusselement (38) umfasst,
und wobei das Rohrventil (28) durch Beaufschlagung mit einem im Saugraum (43) angeordneten und mit dem Verbindungsanschluss (29) in kommunizierender Verbindung stehenden Betätigungssaugnapf (45) von einer geschlossenen in eine offene Stellung überführbar ist,
wobei die Betätigung des Rohrventils (28) durch Verformung des Betätigungssaugnapfes (45) derart erfolgt, dass die Verformung des Betätigungssaugnapfes (45) eine Verschiebung des Verschlusselements (38) in vertikaler Richtung bewirkt, so dass das kreisringförmige Verschlusselement (38) des Rohrventils (28) in eine geöffnete Stellung überführt wird.

2. Saugnapfvorrichtung nach Anspruch 1,
**dadurch gekennzeichnet,**
**dass** am Buchsenelement (31) einen Buchsendichtabschnitt (35) und ein Buchsenführungsabschnitt (34) ausgebildet sind, und das Verschlusselement (38) einen Verschlussdichtabschnitt (40) und einen Verschlussführungsabschnitt (39) aufweist, die korrespondierend zum Buchsendichtabschnitt (35) und zum Buchsenführungsabschnitt (34) ausgebildet sind, wobei das Verschlusselement (38) vom Betätigungssaugnapf (45) derart betätigbar ist, dass das Verschlusselement (38) einen in den Saugnapf (42) mündenden Ansaugkanal (37) öffnet und ein Unterdruck an den Saugraum (43) zwischen Produkt und Saugnapf (42) anlegbar ist.

3. Saugnapfvorrichtung nach Anspruch 1 oder 2,
**dadurch gekennzeichnet,**
**dass** der Betätigungssaugnapf (45) eine permanent geöffnete und mit dem Verbindungsanschluss (29) verbundene Unterdrucköffnung (46) aufweist.

4. Saugnapfvorrichtung nach einem der Ansprüche 1 bis 3,
**dadurch gekennzeichnet,**
**dass** der Saugnapf (42) und der Betätigungssaugnapf (45) relativ zueinander ortsfest angeordnet sind, wobei der Saugnapf (42) und der Betätigungssaugnapf (45) aus einem elastischen Kunststoff ausgebildet sind so dass Saugglocken des Saugnapfes (42) und des Betätigungssaugnapfes (45) elastisch verformbar ausgebildet sind.

5. Saugförderer umfassend
ein Unterdruckprofil (3) mit einem Unterdruckraum (9),
eine Antriebsrolle (13),
eine Umlenkrolle (15),
ein das Unterdruckprofil (3) und die Rollen (13, 15) umlaufend umgebender Riemen (14), **dadurch gekennzeichnet,**
**dass** auf dem Riemen (14) zumindest eine Saugnapfvorrichtung (2) gemäß einem der Ansprüche 1 bis 4 angeordnet ist der mit dem Unterdruckprofil (3) in Verbindung steht

6. Saugförderer nach Anspruch 5,
**dadurch gekennzeichnet,**
**dass** zumindest ein L-förmig ausgebildetes Halteprofil (25) vorgesehen ist, dass eine Bewegung des Riemens (14) in vertikaler Richtung nach unten mit einem horizontalen Halteschenkel (27) begrenzt.

7. Saugförderer nach Anspruch 6, **dadurch gekennzeichnet,**
**dass** ein vertikaler Befestigungsschenkel (26) des Halteprofils (25) mit dem Unterdruckprofil (3) verbunden ist.

8. Saugförderer nach einem der Ansprüche 5 bis 7,
**dadurch gekennzeichnet,**
**dass** das Unterdruckprofil (3) einen Transportabschnitt zum Fördern von Produkten ausbildet in dem ein Unterdruck über ein geöffnetes Rohrventil (28) eines Saugnapfes (42) an den Saugnapf (42) anlegbar ist und im Bereich einer der Rollen (13, 15) ein Abgabeabschnitt zum Ablegen von Produkten ausgebildet ist in dem das Rohrventil (28) des Saugnapfes (42) geschlossen ist.

9. Saugförderer nach einem der Ansprüche 5 bis 8,
**dadurch gekennzeichnet,**
**dass** zwischen dem Riemen (14) und dem Unterdruckprofil (3) eine Saugleiste (19) angeordnet ist, die ausgebildet ist, um das Unterdruckprofil (3) räumlich von dem Riemen zu trennen (14), wobei die Saugleiste (19) oberseitig im Querschnitt in etwa T-förmig ausgebildete und einstückig an der Saugleiste (19) angeformte Verbindungselemente (20) aufweist, um die Saugleiste (19) mit dem Unterdruckprofil (3) zu verbinden, und im Bereich zwischen Verbindungselementen (20) der Saugleiste (19) korrespondierend zur Anordnung von Durchgangsbohrungen (12) des Unterdruckprofils (3) Durchgangsöffnungen (21) ausgeformt.

10. Saugförderer nach einem der Ansprüche 6 bis 9, **dadurch gekennzeichnet,**
**dass** der Saugnapf (42) und der Betätigungssaugnapf (45) am Riemen (14) des Saugförderers ortsfest angeordnet und mit diesem fest verbunden sind und in vertikaler Richtung nicht verschiebbar ausgebildet sind.

## Claims

1. A suction cup device for a suction conveyor, comprising
a suction cup (42) for receiving a product, the suction cup (42) delimiting a suction space (43),
a connection port (29) for applying a negative pressure to the suction space (43), **characterized in that**
the connection port (29) comprises a tube valve (28), the tube valve (28) comprising a socket element (31) and an annular closure element (38),
and wherein the tube valve (28), while being acted upon by an actuator suction cup (45) arranged in the suction space (43) and being in communicating connection with the connection port (29), can be transferred from a closed position to an open position, wherein the actuation of the tube valve (28) by deformation of the actuator suction cup (45) is performed in such a manner that the deformation of the actuator suction cup (45) brings about a displacement of the closure element (38) in the vertical direction, so that the annular closure element (38) of the tube valve (28) is transferred to an opened position.

2. The suction cup device according to claim 1,
**characterized in that**
a socket sealing portion (35) and a socket guiding portion (34) are formed on the socket element (31), and the closure element (38) comprises a closure sealing portion (40) and a closure guiding portion (39) which are formed so as to correspond to the socket sealing portion (35) and the socket guiding portion (34), wherein the closure element (38) can be actuated by the actuator suction cup (45) such that the closure element (38) opens a suction channel (37) opening into the suction cup (42) and a negative pressure can be applied on the suction space (43) between the product and the suction cup (42).

3. The suction cup device according to claim 1 or 2,
**characterized in that**
the actuator suction cup (45) comprises a negative pressure opening (46) which is permanently opened and connected to the connection port (29).

4. The suction cup device according to any of the claims 1 to 3,
**characterized in that**
the suction cup (42) and the actuator suction cup (45) are arranged so as to be fixed relative to each other, wherein the suction cup (42) and the actuator suction cup (45) are made from an elastic synthetic material, so that suction bells of the suction cup (42) and of the actuator suction cup (45) are formed to be elastically deformable.

5. A suction conveyor, comprising
a negative pressure profile (3) having a negative pressure space (9),
a driving pulley (13),
a deflection pulley (15),
a belt (14) surrounding the negative pressure profile (3) and the pulleys (13, 15) in a circulating manner, **characterized in that**
at least one suction cup device (2) according to any of the claims 1 to 4 is arranged on the belt (14), which is in connection with the negative pressure profile (3).

6. The suction conveyor according to claim 5,
**characterized in that**
at least one L-shaped retaining profile (25) is provided which limits a movement of the belt (14) in the vertical direction downward with a horizontal retaining leg (27).

7. The suction conveyor according to claim 6,
**characterized in that**
a vertical fastening leg (26) of the retaining profile (25) is connected to the negative pressure profile (3).

8. The suction conveyor according to any of the claims 5 to 7,
**characterized in that**
the negative pressure profile (3) forms a transport section for conveying products, in which a negative pressure can be applied to the suction cup (42) via an opened tube valve (28) of a suction cup (42), and a delivery section for depositing products is formed in the region of one of the pulleys (13, 15), in which delivery section the tube valve (28) of the suction cup (42) is closed.

9. The suction conveyor according to any of the claims 5 to 8,
**characterized in that**
arranged between the belt (14) and the negative pressure profile (3) is a suction ledge (19) which is configured to spatially separate the negative pressure profile (3) from the belt (14) and comprises connection elements (20) at its upper side which have an approximately T-shaped cross-section and are integrally formed on the suction ledge (19) to connect the suction ledge (19) to the negative pressure profile (3), and passage openings (21) are formed in the area between connection elements (20) of the suction ledge (19) corresponding to the arrangement of through-holes (12) of the negative pressure profile (3).

10. The suction conveyor according to any of the claims 6 to 9,
**characterized in that**
the suction cup (42) and the actuator suction cup (45) are stationarily arranged on the belt (14) of the suction conveyor so as to be firmly connected to it and are designed so as to be not shiftable in the vertical direction.

## Revendications

1. Dispositif à ventouse pour un dispositif de transport à aspiration comprenant
une ventouse (42) pour la réception d'un produit, sachant que la ventouse (42) délimite un espace d'aspiration (43),
un raccord de liaison (29) pour l'application d'une dépression à l'espace d'aspiration (43), **caractérisé en ce que**
le raccord de liaison (29) présente une soupape tubulaire (28), sachant que la soupape tubulaire (28) comprend un élément de douille (31) et un élément d'obturateur (38) en forme d'anneau circulaire,
et sachant que la soupape tubulaire (28) est transférable d'une position fermée à une position ouverte par sollicitation moyennant une ventouse d'actionnement (45) disposée dans l'espace d'aspiration (43) et se trouvant en liaison communiquante avec le raccord de liaison (29), sachant que l'actionnement de la soupape tubulaire (28) s'effectue par déformation de la ventouse d'actionnement (45) de telle façon que la déformation de la ventouse d'actionnement (45) provoque un déplacement de l'élément d'obturateur (38) en direction verticale de telle sorte que l'élément d'obturateur (38) en forme d'anneau circulaire de la soupape tubulaire (28) soit transféré à une position ouverte.

2. Dispositif à ventouse selon la revendication 1,
**caractérisé en ce que**
une section étanche de douille (35) et une section de guidage de douille (34) sont constituées au niveau de l'élément de douille (31), et l'élément d'obturateur (38) présente une section étanche d'obturateur (40) et une section de guidage d'obturateur (39) qui sont constituées de façon correspondante à la section étanche de douille (35) et à la section de guidage de douille (34), sachant que l'élément d'obturateur (38) est actionnable par la ventouse d'actionnement (45) de telle façon que l'élément d'obturateur (38) ouvre un canal d'aspiration (37) qui débouche sur la ventouse (42) et qu'une dépression soit applicable à l'espace d'aspiration (43) entre produit et ventouse (42).

3. Dispositif à ventouse selon la revendication 1 ou 2,
**caractérisé en ce que**
la ventouse d'actionnement (45) présente une ouverture de dépression (46) ouverte en permanence et reliée au raccord de liaison (29).

4. Dispositif à ventouse selon l'une des revendications 1 à 3,
**caractérisé en ce que**
la ventouse (42) et la ventouse d'actionnement (45) sont disposées de manière stationnaire l'une par rapport à l'autre, sachant que la ventouse (42) et la ventouse d'actionnement (45) sont constituées d'une matière synthétique élastique de telle sorte que des cloches d'aspiration de la ventouse (42) et de la ventouse d'actionnement (45) soient constituées de manière élastiquement déformable.

5. Dispositif de transport à aspiration comprenant
un profilé de dépression (3) avec un espace de dépression (9),
un galet d'entraînement (13),
un galet de renvoi (15),
une courroie (14) entourant de manière périphérique le profilé de dépression (3) et les galets (13, 15),
**caractérisé en ce que**
au moins un dispositif à ventouse (2) selon l'une des revendications 1 à 4, lequel est en liaison avec le profilé de dépression (3), est disposé sur la courroie (14).

6. Dispositif de transport à aspiration selon la revendication 5,
**caractérisé en ce que**
au moins un profilé de maintien (25) constitué en forme de L est prévu, lequel limite un mouvement de la courroie (14) en direction verticale vers le bas avec une aile de maintien (27) horizontale.

7. Dispositif de transport à aspiration selon la revendication 6,
**caractérisé en ce que**
une aile de fixation (26) verticale du profilé de maintien (25) est reliée au profilé de dépression (3).

8. Dispositif de transport à aspiration selon l'une des revendications 5 à 7,
**caractérisé en ce que**
le profilé de dépression (3) constitue une section de transport pour le transport de produits, dans laquelle, via une soupape tubulaire (28) ouverte d'une ventouse (42), une dépression est applicable à la ventouse (42), et une section de livraison, dans laquelle la soupape tubulaire (28) de la ventouse (42) est fermée, est constituée dans la zone d'un des galets (13, 15) pour la dépose de produits.

9. Dispositif de transport à aspiration selon l'une des revendications 5 à 8,
**caractérisé en ce que**
une barrette d'aspiration (19) qui est constituée pour séparer spatialement le profilé de dépression (3) de la courroie (14) est disposée entre la courroie (14) et le profilé de dépression (3), sachant que la barrette d'aspiration (19) présente en face supérieure des éléments de liaison (20) constitués sensiblement en forme de T en section transversale et formés d'une seule pièce sur la barrette d'aspiration (19) pour relier la barrette d'aspiration (19) au profilé de dépression (3), et des ouvertures traversantes (21) sont formées dans la zone entre des éléments de liaison (20) de la barrette d'aspiration (19) de manière correspondante à la disposition d'alésages traversants (12) du profilé de dépression (3).

10. Dispositif de transport à aspiration selon l'une des revendications 6 à 9,
**caractérisé en ce que**
la ventouse (42) et la ventouse d'actionnement (45) sont disposées de manière stationnaire au niveau de la courroie (14) du dispositif de transport à aspiration et sont reliées fermement à celle-ci et sont constituées de manière non déplaçable en direction verticale.
